# EUROPÄISCHE PATENTANMELDUNG

(11) **EP 4 571 433 A1**
(43) Veröffentlichungstag der Anmeldung: **18.06.2025**
(21) Anmeldenummer: 23216695.9
(22) Anmeldetag: 14.12.2023
(51) Int. Cl.: G05B 13/02, G06N 3/02

(54) **COMPUTER-IMPLEMENTIERTES VERFAHREN ZUM BETREIBEN EINES EIN NEURONALES NETZ VERWENDENDEN STEUERMODULS ZUM STEUERN EINER MASCHINE, COMPUTERPROGRAMMPRODUKT, COMPUTER-IMPLEMENTIERTE VORRICHTUNG SOWIE ÜBERWACHUNGSSYSTEM**

(71) Anmelder: Siemens Aktiengesellschaft, 80333 München (DE)
(72) Erfinder: Bischoff, Martin, 85653 Aying, Großhelfendorf (DE); Körwer, Niklas, 51065 Köln (DE)
(74) Vertreter: Siemens Patent Attorneys

(57) **Zusammenfassung**

Es wird ein computer-implementiertes Verfahren zum Betreiben eines ein neuronales Netz (30) verwendenden Steuermoduls (20) zum Steuern einer Maschine (40) vorgeschlagen, mit:
Empfangen (S1) einer Anzahl von einen aktuellen Zustand der Maschine angebenden realen Zustandssignalen (Z),
Filtern (S2) der realen Zustandssignale (Z) mittels einer Filter-Einheit (12) zum Bereitstellen von Eingangsdaten (ED) für das neuronale Netz (30) auf der Basis der gefilterten Zustandssignale (G), und
Eingeben (S3) der bereitgestellten Eingangsdaten (ED) in das neuronale Netz (30) des Steuermoduls (20) zum Bereitstellen von Steuersignalen (SD) zum Steuern der Maschine (40).

## Beschreibung

Die vorliegende Erfindung betrifft ein computer-implementiertes Verfahren zum Betreiben eines ein neuronales Netz verwendenden Steuermoduls zum Steuern einer Maschine. Ferner betrifft die Erfindung ein Computerprogrammprodukt, eine computer-implementierte Vorrichtung sowie ein Überwachungssystem.

Insbesondere in der Industrieautomatisierung spielen intelligenz-basierte Steuermodule zum Steuern von technischen Maschinen, beispielsweise Produktionsmaschinen oder Roboter, eine immer wichtigere Rolle. Konkrete Beispielanwendungen für KI-basierte (künstliche Intelligenz) Steuermodule sind KI-basierte Bewegungssteuerungen, welche Antriebe oder Förderbänder von Produktionsmaschinen steuern können.

Hierbei kann es vorteilhaft sein, das einzusetzende KI-Modell zunächst an synthetischen Daten aus Simulationen zu trainieren und dann das trainierte KI-Modell (das trainierte neuronale Netz), welches in einem neuronalen Netz umgesetzt wird, an realen Daten zu evaluieren und einzusetzen. Ein Vorteil des Trainings an synthetischen Simulationsdaten gegenüber Realdaten ist, dass ohne großen Aufwand sehr viele Daten generiert werden können. Ein weiterer Vorteil ist, dass die Bedienungen exakt vorgegeben werden können, zum Beispiel auch problematische und risikoreiche (Fehler-)Fälle, die in der Realität nur selten vorkommen. Ein weiterer Vorteil liegt darin, dass das reale System umfassend die zu steuernde Maschine oft noch nicht existiert, zum Beispiel weil es noch entwickelt wird, oder die Maschine und deren Daten schwer zugänglich sind.

Insbesondere bei Reinforcement Learning, in dem die KI direkt mit dem System/Modell interagiert, haben Simulationsmodelle die zusätzlichen Vorteile:
- exakte Wiederholbarkeit: Die Simulation wird nicht durch externe Störungen beeinflusst.
- Parallelisierbarkeit: Es können mehrere Simulationsprozesse, auch auf verschiedenen Rechnern parallel, durchgeführt werden.
- Eigene Simulationszeit: Die Simulation kann auf dem Rechner schneller als in der Realität ablaufen, um die Zeit für das KI-Training zu reduzieren.
- Kein Risiko: Der Reinforcement-Learning-Algorithmus kann am Simulationsmodell experimentieren, ohne Menschen oder reale Hardware zu gefährden.

In vielen KI-Anwendungen gehen als Input in das neuronale Netz skalare Signale ein, die entsprechend einer Zykluszeit kontinuierlich aktualisiert werden. Die dann eingesetzten neuronalen Netze sind so designt, dass sie mehrere vergangene Zeitschritte betrachten. Dies erfolgt beispielsweise durch den Einsatz von rekurrenten neuronalen Netzen (RNN) oder durch das Stapeln vergangener Zeitschritte. Diese zeitliche Entfaltung kann in manchen Fällen das Sensorrauschen verstärken oder kann dazu führen, dass das neuronale Netz ungünstige Ausgangswerte liefert, da durch das Sensorrauschen der Maschinenzustand nicht mehr richtig ausgewertet werden kann.

Insbesondere aus den oben genannten Gründen werden in vielen Bewegungssteuerungen die neuronalen Netze an Simulationsmodellen trainiert. Bei der Erstellung eines Simulationsmodells ist immer ein Kompromiss zwischen dem Modellierungsaufwand und der Modellgenauigkeit zu finden. So werden Sensortoleranzen und Ungenauigkeiten bei der Signalaufzeichnung, bei der Signalcodierung und bei der Signalkommunikation herkömmlicherweise nicht mehr im Modell abgebildet. Entsprechend unterscheiden sich ab einem gewissen Detaillierungsgrad die synthetischen, aus der Simulation stammenden Signale (auch synthetische Daten genannt) von denen, die an der realen Maschine aufgezeichnet werden (auch Realdaten oder reale Zustandsdaten oder reale Zustandssignale genannt).

Auch wenn ein Modell eine reale Maschine sehr genau reproduzieren kann, so gibt es doch bei ausreichend genauer Betrachtung, das heißt insbesondere bei entsprechend hoher Auflösung der zu betrachtenden Signale, ein starkes Zittern in den realen Signalen, welche in den Simulationssignalen nicht wiedergegeben werden. Dieser Unterschied zwischen Realdaten (reale Zustandssignale) und synthetischen Daten wird auch als sogenannter Reality-Gap bezeichnet. Dieser Reality-Gap kann zu Fehlverhalten des neuronalen Netzes des Steuermoduls führen, da es an der realen Maschine mit Signalmustern arbeiten muss, mit welchen es anhand der Simulationsdaten nicht trainiert wurde. Bei einer KI-basierten Bewegungssteuerung kann dieser nachteilige Effekt des Reality-Gap dabei zutage treten, dass die KI-basierte Bewegungssteuerung an einem konstanten Signal trainiert wurde, welches in der Realität jedoch ein leichtes Zittern aufweist, was die KI-basierte Bewegungssteuerung dann nicht korrekt verarbeiten kann.

Um diese Lücke (Reality-Gap) zwischen Modell und Realität zu schließen, wird herkömmlicherweise daraufgesetzt, noch detailliertere Sensormodelle zu verwenden, um beispielsweise die Ursache des oben erwähnten Zitterns exakt zu modellieren. Alternativ ist es auch möglich, die Simulationssignale mit empirischen Störungen zu beaufschlagen. Anzumerken ist allerdings, dass bei dieser herkömmlichen Modellverbesserung die Simulationssignale zwar dann besser den realen Zustandssignalen (Signaldaten) entsprechen, aber keine hilfreichen neuen Informationen zur Steuerung der Maschine beinhalten, sondern lediglich Rauschen.

Vor diesem Hintergrund besteht eine Aufgabe der vorliegenden Erfindung darin, den Betrieb eines ein neuronales Netz verwendenden Steuermoduls zu verbessern.

Gemäß einem ersten Aspekt wird ein computer-implementiertes Verfahren zum Betreiben eines ein neuronales Netz verwendenden Steuermoduls zum Steuern einer Maschine vorgeschlagen. Das Verfahren umfasst:
a) Empfangen einer Anzahl von einem aktuellen Zustand der Maschine angebenden realen Zustandssignalen,
b) Filtern der realen Zustandssignale mittels einer Filter-Einheit zum Bereitstellen von Eingangsdaten für das neuronale Netz auf der Basis der gefilterten Zustandssignale, und
c) Eingeben der bereitgestellten Eingangsdaten in das neuronale Netz des Steuermoduls zum Bereitstellen von Steuersignalen zum Steuern der Maschine.

Die Maschine ist eine physische Maschine, beispielsweise eine Produktionsmaschine mit durch ein Antriebssystem bewegten Teilen. Beispielsweise umfasst das Antriebssystem einen Motor. Die Maschine kann zum Beispiel auch ein Roboter, eine Automatisierungsanlage mit unterschiedlichen Sensoren und Aktoren und/oder eine Energieerzeugungsanlage sein. Das neuronale Netz des Steuermoduls ist insbesondere an synthetischen Simulationsdaten trainiert. Die realen Zustandssignale können auch als reale Zustandsdaten oder Realdaten bezeichnet werden.

Durch das Filtern der realen Zustandssignale kann deren hochfrequentes Zittern eliminiert werden, und der Unterschied zu synthetischen Simulationssignalen kann reduziert werden. Dadurch kann das an synthetischen Simulationsdaten trainierte neuronale Netz des Steuermoduls die Eingangsdaten im Betrieb besser verarbeiten und bessere Ergebnisse hinsichtlich optimaler Steuersignale zum Steuern der Maschine liefern.

Vorliegend muss auch im Simulationsmodell, das oben diskutierte Reality-Gap nicht geschlossen werden. Das Sensorrauschen nicht mehr mitmodulieren zu müssen und die Rauscheffekte mit der Realität nicht abgleichen zu müssen, spart Engineering-Aufwände bei der Modellerstellung. Auch ist das Training von unverrauschten Signalen effizienter. Das trainierte neuronale Netz könnte Signalrauschen fehlinterpretieren und im Training an suboptimalen Lösungen stagnieren, was vorliegend verhindert ist. Die Anwendung einer Filter-Einheit, beispielsweise eines Tiefpassfilters, auf die realen Zustandssignale im Betrieb kostet nur Rechenzeit von wenigen Mikrosekunden. Die Auswertung des neuronalen Netzes des Steuermoduls in einer Bewegungssteuerung liegt beispielsweise bei 50 bis 200 ps. Entsprechend fällt der Einsatz der Filter-Einheit im Betrieb kaum ins Gewicht.

Im Gegensatz zu einem simulierten oder synthetischen Signal ist das reale Zustandssignal ein reales Signal, das heißt von einer realen physikalischen Überwachungs-Einheit der Maschine, zum Beispiel einem Geschwindigkeitssensor zum Messen einer Motorgeschwindigkeit eines Motors der Maschine. Das reale Zustandssignal wird insbesondere kontinuierlich aktualisiert, vorzugsweise gemäß einer bestimmten Zykluszeit. Vorliegend werden die realen Zustandssignale vor Eingabe in das neuronale Netz mittels der Filter-Einheit gefiltert. Ist das Zustandssignal beispielsweise ein Geschwindigkeitssignal, zum Beispiel ein Motorgeschwindigkeitssignal eines Motors der Maschine oder ein Förderband-Geschwindigkeitssignal eines Förderbandes der Maschine, so kann als Filter-Einheit ein Tiefpassfilter mit einer bestimmten Grenzfrequenz, zum Beispiel 5 Hz, 10 Hz oder 15 Hz gewählt werden. Anzumerken ist, dass die Wahl der geeigneten Filterparameter anwendungsspezifisch ist und beispielsweise von dem Motor, dem Geschwindigkeitsspektrum, der Signalcodierung und der Zykluszeit abhängt.

Gemäß einer Ausführungsform ist der Schritt a) ausgebildet durch:
Empfangen einer Anzahl von kontinuierlich aktualisierten, jeweils einen aktuellen Zustand der Maschine angebenden realen Zustandssignalen.

Hierbei ist "kontinuierlich aktualisiert" vorzugsweise auf die Zykluszeit des Steuermoduls bezogen. Das Steuermodul, beispielsweise ein Programmable-Logic-Controller (PLC) steuert die Maschine gemäß ihrer Zykluszeit. Insbesondere wird dabei der Schritt a) in jedem Zeitschritt der Zykluszeit ausgeführt.

Gemäß einer weiteren Ausführungsform steuert das Steuermodul die Maschine gemäß einer bestimmten Zykluszeit, wobei das Empfangen in dem Schritt a), das Filtern in dem Schritt b) und das Eingeben in dem Schritt c) gemäß der Zykluszeit des Steuermoduls synchronisiert werden. Durch die Synchronisation auf die Zykluszeit kann das vorliegende Verfahren optimal für einen PLC als Steuermodul eingesetzt werden.

Gemäß einer weiteren Ausführungsform wird in dem Schritt a) in jedem durch die Zykluszeit des Steuermoduls definierten Zeitschritt eine Mehrzahl von kontinuierlich aktualisierten, den jeweiligen aktuellen Zustand der Maschine angebenden realen Zustandssignalen empfangen.

Gemäß einer weiteren Ausführungsform wird in dem Schritt a) in jedem durch die Zykluszeit des Steuermoduls definierten Zeitschritt eine Mehrzahl von kontinuierlich aktualisierten, den jeweiligen aktuellen Zustand der Maschine angebenden realen Zustandssignalen von einer Mehrzahl von der Maschine überwachenden Überwachungs-Einheiten empfangen.

Gemäß einer weiteren Ausführungsform umfassen die realen Zustandssignale eine Anzahl von durch die Maschine überwachenden Sensoren bereitgestellten Sensorsignalen und eine Anzahl von Maschinenzustandssignalen, welche indikativ für den Maschinenzustand der Maschine sind. Die Überwachungs-Einheiten umfassen beispielsweise eine Anzahl von Sensoren, die an oder in der Maschine angebracht sind. Auch können die Sensoren in der Umgebung der Maschine vorgesehen sein. Die Sensoren umfassen beispielsweise einen Geschwindigkeitssensor, einen Beschleunigungssensor, einen Temperatursensor, einen Luftdrucksensor oder dergleichen. Beispielsweise kann der Geschwindigkeitssensor als Sensorsignal eine aktuelle Geschwindigkeit eines Motors der Maschine angeben. Der Beschleunigungssensor kann beispielsweise eine aktuelle Beschleunigung eines drehbaren Teils der Maschine angeben. Der Temperatursensor kann beispielsweise eine aktuelle Umgebungstemperatur der Maschine angeben.

Gemäß einer weiteren Ausführungsform umfassen die von dem neuronalen Netz des Steuermoduls bereitgestellten Steuersignale eine Anzahl von Sollwerten zum Ansteuern der Maschine, zum Beispiel eine Sollgeschwindigkeit eines Motors der Maschine.

Gemäß einer weiteren Ausführungsform werden die Schritte a), b) und c) während des Betriebs der Maschine zum Steuern der Maschine ausgeführt. Hierbei ist das vorliegende Verfahren vorzugsweise zum Steuern der Maschine während ihres Betriebs eingerichtet.

Gemäß einer weiteren Ausführungsform wird das neuronale Netz des Steuermoduls unter Verwendung von synthetischen Daten zur Beschreibung des jeweils aktuellen Zustands der Maschine trainiert.

Wie oben bereits dargestellt, wird das neuronale Netz des Steuermoduls vorzugsweise an synthetischen Simulationsdaten trainiert, um die eingangs diskutierten Vorteile des Trainierens an synthetischen Daten nutzen zu können. Vorliegend werden dann aber - wie oben dargestellt - für den Betrieb der Maschine reale Zustandsdaten bereitgestellt und gefiltert, um Eingangsdaten für das neuronale Netz zum Ansteuern der Maschine im Betrieb bereitstellen zu können.

Gemäß einer weiteren Ausführungsform wird ein rekurrentes neuronales Netz als das neuronale Netz des Steuermoduls verwendet. Das rekurrente neuronale Netz ist dazu eingerichtet, mehrere aufeinanderfolgende Zeitschritte der Zykluszeit des Steuermoduls zu berücksichtigen. Durch die Berücksichtigung mehrerer Zeitschritte kann die Steuerung der Maschine durch das neuronale Netz optimiert werden.

Gemäß einer weiteren Ausführungsform wird als Filter-Einheit ein Tiefpassfilter mit einer bestimmten Grenzfrequenz verwendet. Die bestimmte Grenzfrequenz des Tiefpassfilters ist beispielsweise 5 Hz, 10 Hz, 15 Hz oder 20 Hz.

Gemäß einer weiteren Ausführungsform umfasst das neuronale Netz einen Input-Layer, eine Mehrzahl von Hidden-Layern und einen Output-Layer. Dabei hat das Steuermodul vorzugsweise eine Merkmals-Extraktions-Einheit, welche zwischen der Filter-Einheit und dem Input-Layer geschaltet wird und welche bestimmte Merkmale auf der Basis der gefilterten Zustandssignale zum Bereitgestellen der Eingangsdaten für den Input-Layer des neuronalen Netzes bestimmt.

Jede Ausführungsform des ersten Aspekts kann mit jeder Ausführungsform des ersten Aspekts kombiniert werden, um eine andere Ausführungsform des ersten Aspekts zu erhalten.

Gemäß einem zweiten Aspekt wird ein Computerprogrammprodukt vorgeschlagen, welches Befehle umfasst, die bei der Ausführung des Programms durch einen Computer diesen veranlassen, das vorstehend beschriebene computer-implementierte Verfahren gemäß dem ersten Aspekt oder gemäß einer der Ausführungsformen des ersten Aspekts auszuführen.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird ein computerlesbares Speichermedium mit einem Computerprogrammprodukt gemäß dem zweiten Aspekt vorgeschlagen.

Gemäß einem vierten Aspekt wird eine computer-implementierte Vorrichtung zum Betreiben eines ein neuronales Netz verwendendes Steuermoduls zum Steuern einer Maschine vorgeschlagen. Die Vorrichtung umfasst:
eine Empfangs-Einheit zum Empfangen einer Anzahl von einem aktuellen Zustand der Maschine angebenden realen Zustandssignalen,
eine Filter-Einheit zum Filtern der realen Zustandssignale zur Bereitstellung von Eingangsdaten für das neuronale Netz auf der Basis der gefilterten Zustandssignale, und
eine Eingabe-Einheit zum Eingeben der bereitgestellten Eingangsdaten in das neuronale Netz des Steuermoduls zum Bereitstellen von Steuersignalen zum Steuern der Maschine.

Beispielsweise entsprechen die Eingangsdaten für das neuronale Netz den gefilterten Zustandssignalen. In Ausführungsformen kann auch eine Merkmals-Extraktions-Einheit vorgesehen sein, welche bestimmte Merkmale auf der Basis der gefilterten Zustandssignale bestimmt und so die Eingangsdaten für das neuronale Netz generiert. Die Merkmals-Extraktions-Einheit ist insbesondere Teil der Eingabe-Einheit, sie empfängt eingangsseitig die von der Filter-Einheit gefilterten Zustandssignale, extrahiert die bestimmten Merkmale, um ausgangsseitig die Eingangsdaten für das neuronale Netz bereitzustellen.

Die für das vorgeschlagene Verfahren beschriebenen Ausführungsformen und Merkmale gelten für die vorgeschlagene Vorrichtung entsprechend.

Die jeweilige Einheit, zum Beispiel die Filter-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einem fünften Aspekt wird ein Überwachungssystem zum Betreiben einer Maschine vorgeschlagen. Das Überwachungssystem umfasst ein neuronales Netz verwendendes Steuermodul zum Steuern der Maschine und eine mit dem Steuermodul gekoppelte computer-implementierte Vorrichtung gemäß dem vierten Aspekt.

Ferner betrifft die Erfindung auch eine Maschine mit einem Überwachungssystem gemäß dem fünften Aspekt.

Vorteilhafte Ausgestaltungsformen des Verfahrens sind als vorteilhafte Ausgestaltungsformen des Computerprogrammprodukts, des computerlesbaren Speichermediums, des Überwachungssystems sowie der Maschine anzusehen. Insbesondere das Überwachungssystem sowie die Maschine weisen hierzu gegenständliche Merkmale auf, um entsprechende Verfahrensschritte durchführen zu können.

Hier und im Folgenden kann ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebene Kategorie für eine Klassifizierungsaufgabe, einen oder mehrere prädizierte Werte oder eine prädizierte Sequenz beinhalten kann.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Ablaufdiagramm eines computer-implementierten Verfahrens zum Betreiben eines ein neuronales Netz verwendenden Steuermoduls zum Steuern einer Maschine;
- Fig. 2: zeigt ein schematisches Blockdiagramm eines ersten Ausführungsbeispiels eines Überwachungssystems zum Betreiben einer Maschine mit einem ein neuronales Netz verwendenden Steuermodul zum Steuern der Maschine und einer computer-implementierten Vorrichtung zum Betreiben des Steuermoduls;
- Fig. 3: zeigt ein schematisches Blockdiagramm eines zweiten Ausführungsbeispiels eines Überwachungssystems zum Betreiben einer Maschine mit einem ein neuronales Netz verwendenden Steuermodul zum Steuern der Maschine und einer computer-implementierten Vorrichtung zum Betreiben des Steuermoduls;
- Fig. 4: zeigt ein erstes Beispiel eines Diagramms mit einem realen Zustandssignal, einer Mehrzahl von gefilterten realen Zustandssignalen und einem simulierten Zustandssignal; und
- Fig. 5: zeigt ein zweites Beispiel eines Diagramms mit einem realen Zustandssignal, einer Mehrzahl von gefilterten realen Zustandssignalen und einem simulierten Zustandssignal.

In den Figuren sind gleiche oder funktionsgleiche Elemente mit denselben Bezugszeichen versehen worden, sofern nichts anderes angegeben ist.

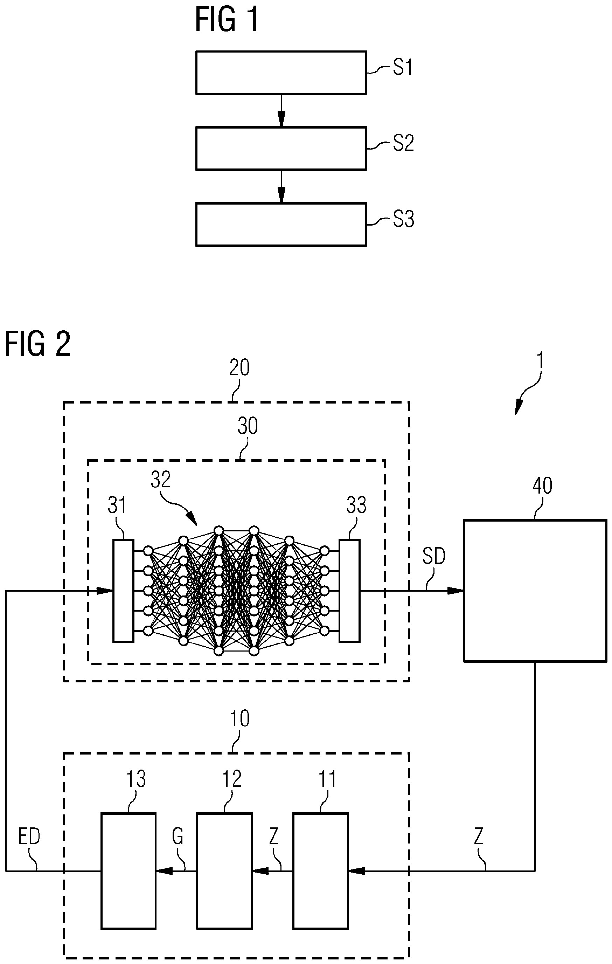

In Fig. 1 ist ein schematisches Ablaufdiagramm eines computer-implementierten Verfahrens zum Betreiben eines ein neuronales Netz 30 verwendenden Steuermoduls 20 zum Steuern einer Maschine 40 dargestellt.

Das Verfahren nach Fig. 1 wird im Folgenden unter Bezugnahme auf die Fig. 2 erläutert. Dabei zeigt die Fig. 2 ein schematisches Blockdiagramm eines ersten Ausführungsbeispiels eines Überwachungssystems 1 zum Betreiben einer Maschine 40 mit einem ein neuronales Netz 30 verwendenden Steuermodul 20 zum Steuern der Maschine 40 und einer mit dem Steuermodul 20 gekoppelten computer-implementierten Vorrichtung 10 zum Betreiben des Steuermoduls 20. Das Steuermodul 20 umfasst beispielsweise einen Computer, einen Rechner, einen FPGA, einen ASIC oder dergleichen und steuert die Maschine 40 mit geeigneten Steuersignalen SD oder Steuerdaten an. Die Maschine 40 ist beispielsweise eine Produktionsmaschine und umfasst insbesondere einen Motor. Beispielsweise umfassen die Steuersignale SD Sollwerte zum Ansteuern der Maschine 40, beispielsweise eine Sollgeschwindigkeit des Motors der Maschine 40.

Das Verfahren nach Fig. 1 umfasst die Schritte S1 bis S3. Hierbei ist die computer-implementierte Vorrichtung 10 der Fig. 2 insbesondere zum Ausführen der Schritte S1 bis S3 des Verfahrens nach Fig. 1 eingerichtet.

In Schritt S1 wird eine Anzahl von einem aktuellen Zustand der Maschine 40 angebenden realen Zustandssignalen Z empfangen.

Wie die Fig. 2 zeigt, hat die computer-implementierte Vorrichtung 10 hierzu eine Empfangseinheit 11, welche dazu eingerichtet ist, die realen Zustandssignale Z der Maschine 40 zu empfangen.

Insbesondere umfasst der Schritt S1 ein Empfangen einer Anzahl von kontinuierlich aktualisierten, jeweils einen aktuellen Zustand der Maschine 40 angebenden realen Zustandssignalen Z. Hierbei bezieht sich "kontinuierlich aktualisiert" insbesondere auf die Zykluszeit des Steuermoduls 20. Insbesondere steuert das Steuermodul 20 die Maschine 40 gemäß ihrer Zykluszeit. Diese Zykluszeit ist in Ausführungsformen einstellbar. Dabei wird vorzugsweise in dem Schritt S1 in jedem durch die Zykluszeit des Steuermoduls 20 definierten Zeitschritt eine Mehrzahl von kontinuierlich aktualisierten, den jeweiligen aktuellen Zustand der Maschine 40 angegeben realen Zustandssignalen Z empfangen.

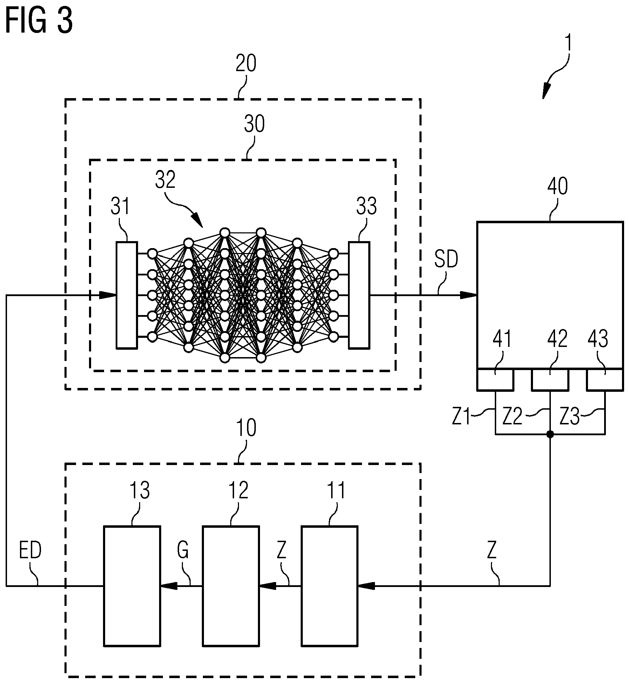

Die realen Zustandssignale Z können beispielsweise eine Anzahl von Sensorsignalen und eine Anzahl von Maschinenzustandssignalen umfassen, welche indikativ für den Zustand der Maschine 40 sind (siehe hierzu insbesondere diskutierte Fig. 3). Beispielsweise werden die Sensorsignale von einer Anzahl von Sensoren bereitgestellt, welche in der Maschine 40, an der Maschine 40 oder in der Umgebung der Maschine 40 angeordnet sind. Beispielsweise umfassen diese Sensoren Geschwindigkeitssensoren, Beschleunigungssensoren, Temperatursensoren, Luftdrucksensoren und dergleichen. Die Maschinenzustandssignale können beispielsweise einen bestimmten Status oder Betriebszustand der Maschine 40 angeben.

In Schritt S2 werden die realen Zustandssignale Z mittels einer Filter-Einheit 12 zu gefilterten Zustandssignalen G gefiltert, um Eingangsdaten ED für das neuronale Netz 30 auf der Basis der gefilterten Zustandssignalen G bereitzustellen. Die Filter-Einheit 12 ist beispielsweise ein Tiefpassfilter mit einer bestimmten Grenzfrequenz. Beispielsweise ist die Grenzfrequenz 5 Hz, 10 Hz oder 15 Hz.

Dabei filtert die Filter-Einheit 12, wie in Fig. 2 gezeigt, die realen Zustandssignale Z und stellt ausgangsseitig die gefilterte Zustandssignale G bereit.

In Schritt S3 werden die bereitgestellten Eingangsdaten ED in das neuronale Netz 30 des Steuermoduls 20 zum Bereitstellen der Steuersignale SD zum Steuern der Maschine 40 eingegeben. Die gefilterten Zustandssignale G werden dabei insbesondere einer Eingabe-Einheit 13 gemäß Fig. 2 bereitgestellt. Die Eingabe-Einheit 13 der computer-implementierten Vorrichtung 10 ist dazu eingerichtet, die Eingangsdaten ED in das neuronale Netz 30 des Steuermoduls 20 einzugeben. Wie die Fig. 2 illustriert, umfasst das neuronale Netz 30 einen Input-Layer 31, eine Mehrzahl von Hidden-Layern 32 und einen Output-Layer 33. Das neuronale Netz 30 empfängt eingangsseitig über seinen Input-Layer 31 die bereitgestellten Eingangsdaten ED, verarbeitet diese Eingangsdaten ED mittels der Mehrzahl von Hidden Layern 32 und stellt über ihren Output-Layer 33 die Steuersignale SD zum Steuern der Maschine 40 bereit.

Beispielsweise entsprechen die Eingangsdaten ED für das neuronale Netz 30 den gefilterten Zustandssignalen G. In Ausführungsformen kann auch eine Merkmals-Extraktions-Einheit vorgesehen sein, welche bestimmte Merkmale auf der Basis der gefilterten Zustandssignale G bestimmt und so die Eingangsdaten ED für das neuronale Netz 30 generiert. Die Merkmals-Extraktions-Einheit ist insbesondere Teil der Eingabe-Einheit 13, sie empfängt eingangsseitig die von der Filter-Einheit 12 gefilterten Zustandssignale G, extrahiert die bestimmten Merkmale, um ausgangsseitig die Eingangsdaten ED für das neuronale Netz 30 bereitzustellen.

Das Empfangen des Schrittes S1, das Filtern des Schrittes S2 und das Eingeben des Schrittes S3 werden vorzugsweise gemäß der Zykluszeit des Steuermoduls 20 synchronisiert. Insbesondere werden die Schritte S1, S2 und S3 zum Steuern der Maschine 40 während des Betriebs der Maschine 40 ausgeführt. Vor dem Betrieb der Maschine 40 wird das neuronale Netz 30 des Steuermoduls 20 trainiert. Hierbei wird das neuronale Netz 30 vorzugsweise unter Verwendung von synthetischen Daten zur Beschreibung des jeweils aktuellen Zustands der Maschine 40 trainiert.

Das neuronale Netz 30 ist insbesondere ein rekurrentes neuronales Netz (RNN). Das rekurrente neuronale Netz ist dabei insbesondere dazu eingerichtet, mehrere aufeinanderfolgende Zeitschritte der Zykluszeit des Steuermoduls 20 zu berücksichtigen. Mit anderen Worten kann das rekurrente neuronale Netz 30 mehrere vergangene Zeitschritte betrachten. Vorzugsweise können mehrere vergangene Zeitschritte der Zykluszeit des Steuermoduls 20 gestapelt werden und entsprechend verarbeitet werden.

Fig. 3 zeigt ein schematisches Blockdiagramm eines zweiten Ausführungsbeispiels eines Überwachungssystems 1 zum Betreiben einer Maschine 40 mit einem ein neuronales Netz 30 verwendenden Steuermodul 20 zum Steuern der Maschine 40 und einer computer-implementierten Vorrichtung 10 zum Betreiben des Steuermoduls 20. Das zweite Ausführungsbeispiel nach Fig. 3 basiert auf dem ersten Ausführungsbeispiel nach Fig. 2 und umfasst alle dessen Merkmale. Zusätzlich zeigt die Fig. 3, dass eine Mehrzahl von die Maschine 40 überwachenden Überwachungs-Einheiten 41-44 vorgesehen ist. Die jeweilige Überwachungs-Einheit 41-43 ist in der Maschine 40, an der Maschine 40 oder in der Umgebung der Maschine 40 angeordnet. In dem Beispiel der Fig. 3 stellen die Überwachungs-Einheit 41 und die Überwachungs-Einheit 42 Sensoren dar, und die Überwachungs-Einheit 43 ist dazu eingerichtet, ein Maschinenzustandssignal Z3 bereitzustellen. Das Maschinenzustandssignal Z3 ist indikativ für den Maschinenzustand der Maschine 40 und gibt beispielsweise an, in welchem Zustand die Maschine 40 ist, beispielsweise eingeschaltet, ausgeschaltet und/oder in einem bestimmten Betriebszustand, beispielsweise einen bestimmten Prozess abarbeitend. Die Sensoren 41 und 42 umfassen beispielsweise einen Geschwindigkeitssensor 41 und einen Temperatursensor 42. Der Geschwindigkeitssensor 41 gibt beispielsweise als Sensorsignal Z1 eine aktuelle Geschwindigkeit eines Motors der Maschine 40 an. Der Temperatursensor 42 gibt beispielsweise als Sensorsignal Z2 eine aktuelle Umgebungstemperatur der Maschine 40 an. Die realen Zustandssignale Z1, Z2, Z3, bereitgestellt durch die Überwachungs-Einheiten 41-43 gemäß Fig. 3, werden zu einem Vektor zusammengefasst, welcher die Zustandssignale Z der Maschine 40 repräsentiert. Insbesondere umfasst der Vektor Z für jeden Zeitschritt der Zykluszeit ein Tripel umfassend Z1, Z2 und Z3.

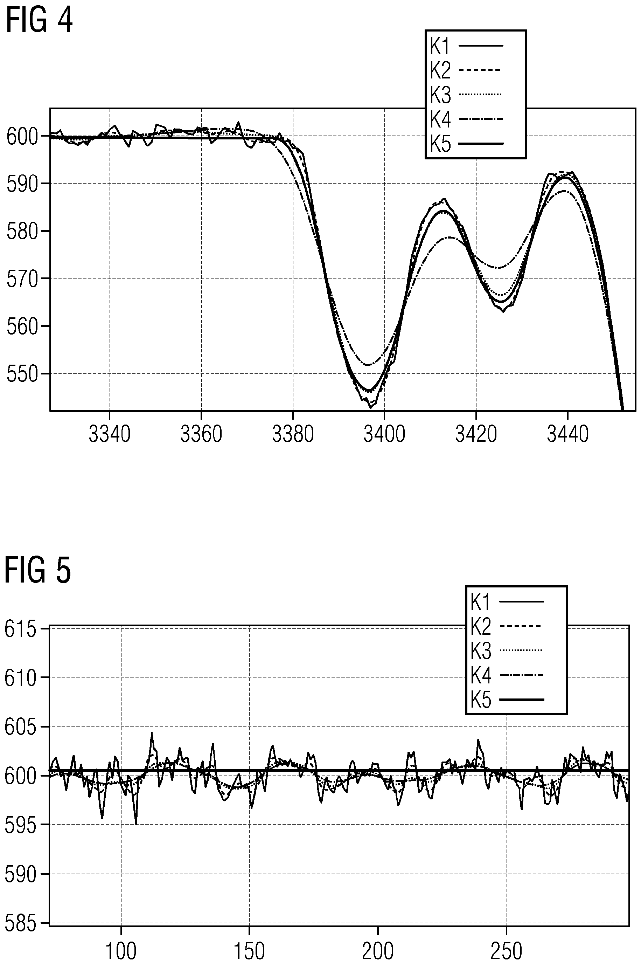

Fig. 4 und Fig. 5 zeigen Beispiele eines Diagramms mit einem realen Zustandssignal, einer Mehrzahl von gefilterten realen Zustandssignalen und einem simulierten Zustandssignal. In den Fig. 4 und 5 ist das Zustandssignal ein Geschwindigkeitsaktualwert eines Motors der Maschine 40. Hierbei zeigt die Fig. 4 eine stark variierende Motorgeschwindigkeit, wohingegen die Fig. 5 eine konstante Motorgeschwindigkeit illustriert.

In den Fig. 4 und 5 zeigt dabei die Kurve K1 die reale Motorgeschwindigkeit (und damit das reale Zustandssignal), wohingegen die Kurve K2 das mit einem 5-Hz-Tiefpassfilter gefilterte Signal, die Kurve K3 das mit einem 10-Hz-Tiefpassfilter gefilterte Signal, die Kurve K4 das mit einem 15-Hz-Tiefpassfilter gefilterte Signal und die Kurve K5 das simulierte Zustandssignal (simulierte Motorgeschwindigkeit) darstellen.

Aus den beiden Abbildungen der Fig. 4 und 5 ist erkennbar, dass das mit einem 10-Hz-Tiefpassfilter gefilterte Signal K3 die simulierte Motorgeschwindigkeit gemäß der Kurve K5 deutlich besser approximiert als das ursprüngliche Signal der Kurve K1. Das mit dem 5-Hz-Tiefpassfilter gefilterte Signal gemäß der Kurve K2 ist bereits eine deutliche Verbesserung, schwankt aber noch relativ stark. Filtert man mit einem 15-Hz-Tiefpassfilter gemäß der Kurve K4, gehen zu viele Informationen verloren, das heißt die lokalen Maxima und Minima des gefilterten Signals sind zu weit von den realen Werten entfernt.

Im Gegensatz zu einem simulierten Signal ist das reale Zustandssignal ein reales Signal, das heißt von einer realen physikalischen Überwachungs-Einheit der Maschine, zum Beispiel einem Geschwindigkeitssensor zum Messen einer Motorgeschwindigkeit eines Motors der Maschine. Das reale Zustandssignal wird insbesondere kontinuierlich aktualisiert, vorzugsweise gemäß einer bestimmten Zykluszeit. Vorliegend werden die realen Zustandssignale vor Eingabe in das neuronale Netz mittels der Filter-Einheit gefiltert. Ist das Zustandssignal beispielsweise ein Geschwindigkeitssignal, zum Beispiel ein Motorgeschwindigkeitssignal eines Motors der Maschine oder ein Förderband-Geschwindigkeitssignal eines Förderbandes der Maschine, so kann als Filter-Einheit ein Tiefpassfilter mit einer bestimmten Grenzfrequenz, zum Beispiel 5 Hz, 10 Hz oder 15 Hz gewählt werden. Anzumerken ist, dass die Wahl der geeigneten Filterparameter anwendungsspezifisch ist und insbesondere von dem Motor, dem Geschwindigkeitsspektrum, der Signalcodierung und der Zykluszeit abhängt.

Obwohl die vorliegende Erfindung anhand von Ausführungsbeispielen beschrieben wurde, ist sie vielfältig modifizierbar.

Unabhängig vom grammatikalischen Geschlecht eines bestimmten Begriffes sind Personen mit männlicher, weiblicher oder anderer Geschlechteridentität mit umfasst.

### Bezugszeichenliste

- 1: Überwachungssystem
- 10: Vorrichtung
- 11: Empfangs-Einheit
- 12: Filter-Einheit
- 13: Eingabe-Einheit
- 20: Steuermodul
- 30: neuronales Netz
- 31: Input-Layer
- 32: Hidden-Layer
- 33: Output-Layer
- 40: Maschine
- 41: Überwachungs-Einheit
- 42: Überwachungs-Einheit
- 43: Überwachungs-Einheit

- ED: Eingangsdaten
- G: gefilterte Zustandssignale
- K1: Kurve
- K2: Kurve
- K3: Kurve
- K4: Kurve
- K5: Kurve
- 51: Verfahrensschritt
- S2: Verfahrensschritt
- S3: Verfahrensschritt
- SD: Steuersignale (Steuerdaten)
- Z: Zustandssignale
- Z1: Zustandssignale der Überwachungs-Einheit 41
- Z2: Zustandssignale der Überwachungs-Einheit 42
- Z3: Zustandssignale der Überwachungs-Einheit 43

## Patentansprüche

1. Computer-implementiertes Verfahren zum Betreiben eines ein neuronales Netz (30) verwendenden Steuermoduls (20) zum Steuern einer Maschine (40), mit:
a) Empfangen (S1) einer Anzahl von einem aktuellen Zustand der Maschine (40) angebenden realen Zustandssignalen (Z),
b) Filtern (S2) der realen Zustandssignale (Z) mittels einer Filter-Einheit (12) zum Bereitstellen von Eingangsdaten (ED) für das neuronale Netz (30) auf der Basis der gefilterten Zustandssignale (G), und
c) Eingeben (S3) der bereitgestellten Eingangsdaten (ED) in das neuronale Netz (30) des Steuermoduls (20) zum Bereitstellen von Steuersignalen (SD) zum Steuern der Maschine (40).

2. Verfahren nach Anspruch 1,
**dadurch gekennzeichnet,**
**dass** der Schritt a) ausgebildet ist durch:
Empfangen (S1) einer Anzahl von kontinuierlich aktualisierten, jeweils einen aktuellen Zustand der Maschine (40) angebenden realen Zustandssignalen (Z).

3. Verfahren nach Anspruch 1 oder 2,
**dadurch gekennzeichnet,**
**dass** das Steuermodul (20) die Maschine (40) gemäß einer bestimmten Zykluszeit steuert, wobei das Empfangen in dem Schritt a) (S1), das Filtern in dem Schritt b) (S2) und das Eingeben in dem Schritt c) (S3) gemäß der Zykluszeit des Steuermoduls (20) synchronisiert werden.

4. Verfahren nach Anspruch 3,
**dadurch gekennzeichnet,**
**dass** in dem Schritt a) (S1) in jedem durch die Zykluszeit des Steuermoduls (20) definierten Zeitschritt eine Mehrzahl von kontinuierlich aktualisierten, den jeweiligen aktuellen Zustand der Maschine (40) angebenden realen Zustandssignalen (Z) empfangen wird.

5. Verfahren nach Anspruch 3,
**dadurch gekennzeichnet,**
**dass** in dem Schritt a) (S1) in jedem durch die Zykluszeit des Steuermoduls (20) definierten Zeitschritt eine Mehrzahl von kontinuierlich aktualisierten, den jeweiligen aktuellen Zustand der Maschine (40) angebenden realen Zustandssignalen (Z) von einer Mehrzahl von der Maschine (40) überwachenden Überwachungs-Einheiten (41-43) empfangen wird.

6. Verfahren nach einem der Ansprüche 1 bis 5,
**dadurch gekennzeichnet,**
**dass** die realen Zustandssignale (Z) eine Anzahl von durch die Maschine (40) überwachenden Sensoren (41, 42) bereitgestellten Sensorsignalen (Z1, Z2) und eine Anzahl von Maschinenzustandssignalen (Z3) umfassen, welche indikativ für den Maschinenzustand der Maschine (40) sind.

7. Verfahren nach einem der Ansprüche 1 bis 6,
**dadurch gekennzeichnet,**
**dass** die von dem neuronalen Netz (30) des Steuermoduls (20) bereitgestellten Steuersignale (SD) eine Anzahl von Sollwerten zum Ansteuern der Maschine (40) umfassen, zum Beispiel eine Sollgeschwindigkeit eines Motors der Maschine (40).

8. Verfahren nach einem der Ansprüche 1 bis 7,
**dadurch gekennzeichnet,**
**dass** die Schritte a) (S1), b) (S2) und c) (S3) zum Steuern der Maschine (40) während des Betriebs der Maschine (40) ausgeführt werden.

9. Verfahren nach einem der Ansprüche 1 bis 8,
**dadurch gekennzeichnet,**
**dass** das neuronale Netz (30) des Steuermoduls (20) unter Verwendung von synthetischen Daten zur Beschreibung des jeweils aktuellen Zustands der Maschine (40) trainiert wird.

10. Verfahren nach einem der Ansprüche 1 bis 9,
**dadurch gekennzeichnet,**
**dass** ein rekurrentes neuronales Netz als das neuronale Netz (30) des Steuermoduls (20) verwendet wird, welches dazu eingerichtet ist, mehrere aufeinanderfolgende Zeitschritte der Zykluszeit des Steuermoduls (20) zu berücksichtigen.

11. Verfahren nach einem der Ansprüche 1 bis 10,
**dadurch gekennzeichnet,**
**dass** als Filter-Einheit (12) ein Tiefpassfilter mit einer bestimmten Grenzfrequenz verwendet wird.

12. Verfahren nach einem der Ansprüche 1 bis 11,
**dadurch gekennzeichnet,**
**dass** das neuronale Netz (30) einen Input-Layer (31), eine Mehrzahl von Hidden-Layern (32) und einen Output-Layer (33) umfasst, wobei als Eingabe-Einheit (13) eine Merkmals-Extraktions-Einheit vorgesehen wird, welche zwischen der Filter-Einheit (12) und dem Input-Layer (31) geschaltet wird und welche bestimmten Merkmale auf der Basis der gefilterten Zustandssignale (G) zum Bereitgestellen der Eingangsdaten (ED) für den Input-Layer (31) des neuronalen Netzes (30) bestimmt.

13. Computerprogrammprodukt, umfassend Befehle, die bei der Ausführung des Programms durch einen Computer diesen veranlassen, das computer-implementierte Verfahren nach einem der Ansprüche 1 bis 12 auszuführen.

14. Computer-implementierte Vorrichtung (10) zum Betreiben eines ein neuronales Netz (30) verwendenden Steuermoduls (20) zum Steuern einer Maschine (40), mit:
einer Empfangs-Einheit (11) zum Empfangen einer Anzahl von einem aktuellen Zustand der Maschine (40) angebenden realen Zustandssignalen (Z),
einer Filter-Einheit (12) zum Filtern der realen Zustandssignale (Z) zur Bereitstellung von Eingangsdaten (ED) für das neuronale Netz (30) auf der Basis der gefilterten Zustandssignale (G), und
einer Eingabe-Einheit (13) zum Eingeben der bereitgestellten Eingangsdaten (ED) in das neuronale Netz (30) des Steuermoduls (20) zum Bereitstellen von Steuersignalen (SD) zum Steuern der Maschine (40).

15. Überwachungssystem (1) zum Betreiben einer Maschine (40), mit
einem ein neuronales Netz (30) verwendenden Steuermodul (20) zum Steuern der Maschine (40), und
einer mit dem Steuermodul (20) gekoppelten computer-implementierten Vorrichtung (10) nach Anspruch 14.
